# FASCICULE DE BREVET EUROPEEN

(11) **EP 4 259 959 B1**
(45) Date de publication et mention de la délivrance du brevet: **01.04.2026**
(21) Numéro de dépôt: 20821199.5
(22) Date de dépôt: 08.12.2020
(51) Int. Cl.: F16L 13/02, F16L 59/20

(54) **RACCORD POUR JONCTION DE PIPELINE À DOUBLE ENVELOPPE**
FITTING FÜR DOPPELWANDIGE ROHRVERBINDUNG
FITTING FOR DOUBLE-WALLED PIPELINE CONNECTION

(43) Date de publication de la demande: 18.10.2023
(73) Titulaire: ITP SA, 78430 Louveciennes (FR)
(72) Inventeur: DAMOUR, Jean-Aurélien, 78430 Louveciennes (FR); GEERTSEN, Christian, 78430 Louveciennes (FR)
(74) Mandataire: Cabinet Célanie
(86) Numéro de dépôt international: PCT/EP2020/085131
(87) Numéro de publication internationale: WO 2022/122129

(56) Documents cités:
- WO-A1-2012/098528
- WO-A2-2008/053251
- JP-A- S5 457 266

## Description

### DOMAINE DE L'INVENTION

Le secteur technique de la présente invention concerne les raccords pour jonction de pipelines à double enveloppe. Ces pipelines sont constitués de sections assemblées par soudure sur un bateau off shore. Des raccords similaires sont connus des documents WO2008053251A2, WO2012098528A1 et JPS5457266A.

### ETAT DE LA TECHNIQUE

Il est bien connu d'utiliser pour le transport du pétrole des pipelines à double enveloppe composée d'un tube intérieur et d'un tube extérieur disposés de manière concentrique et définissant entre eux un espace annulaire dans lequel est placé un isolant thermique.

Ces pipelines double enveloppe sont fabriqués en sections de différentes longueurs qui sont soudées les unes aux autres sur les bateaux de pose au cours de campagnes off shore.

Les sections se présentent avec un tube intérieur légèrement plus long que le tube extérieur, le tube extérieur étant rabattu selon un profil tronconique à ses extrémités et soudé au tube intérieur de manière étanche.

Les tubes intérieurs de deux sections successives sont donc soudés l'un à l'autre pour réaliser le pipeline. Il existe deux modes principaux de pose des canalisations offshore sur barge, la pose en J et la pose en S.

Pour la pose en J, la canalisation en cours de pose se présente à la verticale ou avec un léger angle par rapport à la verticale alors que pour la pose en S la canalisation se présente à l'horizontale ou avec un léger angle par rapport à l'horizontale.

On comprend bien que, dans cette configuration, la jonction des tubes intérieurs entre deux sections successives est d'une part à simple enveloppe, d'autre part dépourvue d'isolant thermique. Cette jonction constitue donc un point de variation d'isolation thermique et de faiblesse mécanique qui affecte de manière notable le fonctionnement du pipeline ainsi que sa durée de vie.

Cette configuration de jonction présente cependant un avantage énorme, elle ne nécessite qu'une seule soudure. Or, la durée des opérations de pose des canalisations off shore est un facteur critique en raison du coût des barges de pose, en général compris entre 200 000 et 1 000 000 € par jour. Le gain de temps sur les opérations de pose représente donc une économie non négligeable. Une solution ne nécessitant qu'une seule soudure permet de gagner un temps considérable en plus de diminuer de moitié le risque technique relatif à la soudure. Une fois les deux sections successives de tube intérieur de la canalisation à double enveloppe soudées, la pose complète d'un manchon de protection prend moins de dix minutes.

Il reste cependant nécessaire de remédier à la fragilité que représentent ces jonctions à simple enveloppe. Dans ce but, il est bien connu de disposer au niveau de ces jonctions un raccord composé d'un manchon lui-même double enveloppe, ayant un diamètre légèrement supérieur à celui du tube extérieur. Le manchon est engagé autour du tube extérieur d'une section puis coulissé pour recouvrir les tubes extérieurs des deux sections successives et un matériau durcissant de type polyuréthane est alors injecté dans l'espace libre défini par le tube intérieur du pipeline, les parois des tubes extérieurs des sections successives et le manchon.

Cette technique présente plusieurs limitations qui affectent les performances globales du pipeline. En effet, le matériau durcissant classiquement utilisé est une résine polyuréthane qui assure une bonne adhésion avec le manchon. Toutefois, ce matériau durcissable ne résiste pas à des températures supérieures à 100 °C en milieu marin pour une durée de sollicitation de l'ordre de 10 à 20 ans. Pour des températures inférieures à 100 °C, le polyuréthane ne pose pas de problème malgré un rétreint car il adhère aux surfaces en regard. Un autre matériau utilisé est le DiPolyCycloPentadiène (DPCD) qui lui présente une tenue en température pouvant aller jusqu'à 180°C. Par contre, ce DPCD manifeste au cours de son durcissement un retreint thermique et chimique non négligeable équivalent à plusieurs pourcents en volume. Ce retreint implique que ce matériau ne permet pas une bonne transmission des efforts mécaniques entre les deux sections successives et le manchon.

En outre, ce retreint est aggravé par l'adhésion médiocre du DPCD avec les parois du manchon, du tube intérieur et du tube extérieur du pipeline.

Le jeu créé par ce retreint est plus important dans la partie centrale du raccord de jonction, car c'est là où l'épaisseur du matériau durcissant est la plus grande, entre 20 et 50 mm environ. Le rétreint peut dans cette partie atteindre jusqu'à 1 à 4 mm.

Cela entraîne bien entendu que les contraintes mécaniques subies par le tube intérieur du pipeline ne seront pas transmises efficacement au manchon et qui, dans le pire des cas, peut se déplacer sous son propre poids.

Il en résulte donc une réduction de la durée de vie du pipeline par rapport à la fatigue mécanique, car ce type de canalisation est soumis à de fortes contraintes mécaniques, lors de la pose sur site off shore ainsi que tout au long du fonctionnement de la canalisation.

### EXPOSE DE L'INVENTION

C'est l'objectif de l'invention que de proposer un raccord pour jonction de sections de pipeline ne présentant pas ces inconvénients.

L'invention a donc pour objet un raccord de canalisation pour pipeline à double enveloppe constitué d'un ensemble de sections comprenant notamment un tube intérieur et un tube extérieur, destinée à assurer l'isolation thermique de la jonction entre deux sections successives, ainsi que la transmission des efforts mécaniques, caractérisé en ce que le raccord est constitué d'au moins un segment disposé autour de la jonction des tubes intérieurs des deux sections successives au niveau de la soudure des tubes intérieurs et maintenu par un système de fixation, d'un manchon calorifugé double enveloppe disposé autour des tubes extérieurs et centré au niveau de la soudure et d'un matériau de remplissage durcissant injecté ou coulé entre le manchon et le au moins un segment de manière à remplir l'espace interstitiel délimité par les tubes intérieurs de la canalisation, le au moins un segment et le manchon calorifugé.

Selon une caractéristique du raccord selon l'invention, il comprend plusieurs segments, et plus particulièrement entre un et quatre segments.

Selon une autre caractéristique du raccord selon l'invention, chaque segment se présente sous la forme de demi-coquilles.

Avantageusement, chaque segment est fabriqué par moulage.

Selon encore une autre caractéristique du raccord selon l'invention, chaque segment est constitué par un matériau durcissant de type DPCD (DiPolyCycloPentadiène) ou de type polyepoxydes (« époxy »).

Selon encore une autre caractéristique du raccord selon l'invention, le moyen de fixation d'un segment est du type cerclage.

Selon encore une autre caractéristique du raccord selon l'invention, le manchon est un manchon double enveloppe constitué d'un tube intérieur, d'un tube extérieur et d'un matériau isolant thermiquement dans l'annulaire créé entre ces deux tubes.

Selon encore une autre caractéristique du raccord selon l'invention, le matériau de remplissage durcissant injecté ou coulé est un matériau de type DPCD ou une résine polyuréthane.

Ces deux matériaux permettent de concevoir une réalisation différenciée selon la température à laquelle ils peuvent être soumis lors de l'exploitation en situation.

Un avantage de la présente invention réside dans le fait qu'elle permet de réduire le retreint à moins d'un millimètre, par la réduction de la quantité de matériau injecté. Dans les parties latérales, le rétreint reste inchangé car l'épaisseur de matériau durcissant reste la même. Le reteint est alors compris entre 0,3 et 0,6 mm.

Cette réduction du retreint permet d'augmenter la transmission des efforts mécaniques et donc d'augmenter la durée de vie du pipeline double enveloppe.

Un autre avantage de la présente invention réside dans le fait que lors de l'utilisation de la canalisation on provoque une augmentation de la température du matériau durcissant, ce qui entraîne l'augmentation de l'efficacité mécanique du raccord de canalisation. En effet, l'augmentation de température provoque une dilatation thermique du matériau durcissant ce qui réduit le jeu créé par le rétreint du matériau durcissant, entre le dit matériau durcissant et le manchon car le coefficient de dilatation thermique des matériaux polymères est supérieur à celui de l'acier.

Un autre avantage de l'invention réside dans le fait que certains matériaux de type DPCD requièrent l'utilisation des mêmes machines d'injection que la résine polyuréthane qui sont les machines utilisées régulièrement sur les barges off shore et qui assurent le remplissage par coulée ou par injection, du raccord de jonction.

Ceci permet la mise en œuvre du raccord de jonction selon l'invention sans avoir à investir dans des matériels supplémentaires.

Un autre avantage de l'invention réside dans le fait que le raccord de jonction selon l'invention peut être utilisé dans les deux modes de pose de la canalisation, le mode J ou le mode S.

Un autre avantage de l'invention réside dans le fait qu'elle peut être réalisée en utilisant comme matériau durcissant une résine polyuréthane plutôt que du DPCD. Dans ce mode de réalisation alternatif, les demi-coquilles sont toujours réalisées en DPCD ou en époxy.

Ce mode de réalisation est destiné à des utilisations à des températures pouvant aller jusqu'à 105 ou 110°C.

Cette possibilité est due au fait qu'une dégradation partielle de la résine polyuréthane au contact du tube intérieur de la canalisation et au niveau des demi-coquilles est acceptable pour les performances mécaniques du raccord. En effet, les demi-coquilles non dégradées permettent la transmission des contraintes mécaniques entre le tube intérieur de la canalisation et la couche supérieure de résine PU puis au manchon. Cette couche supérieure de PU est non dégradée car reste exposée à une température acceptable.

Ce mode de réalisation présente en outre l'avantage que la résine polyuréthane adhère aux parois des tubes malgré le rétreint lors de la prise.

### BREVE DESCRIPTION DES DESSINS

D'autres caractéristiques, avantages et détails de l'invention seront mieux compris à la lecture du complément de description qui va suivre en rapport avec les dessins dans lesquels :
[FIG 1] représente une coupe de deux sections de pipeline assemblées,
[FIG 2] est une vue en coupe longitudinale du raccord de jonction selon l'invention d'une jonction de pipeline à double enveloppe, et
[FIG 3] est une vue en coupe transversale du raccord de jonction selon l'invention.

### DESCRIPTION DETAILLEE DE MODES DE REALISATION DE L'INVENTION

L'invention va maintenant est exposée avec d'avantage de détails. Comme indiqué précédemment un pipeline double enveloppe est constitué de plusieurs sections de façon à obtenir des longueurs de l'ordre de plusieurs centaines de mètres ou de plusieurs kilomètres. Il s'agit alors de raccorder ces différentes sections et de protéger et consolider la jonction entre deux sections successives.

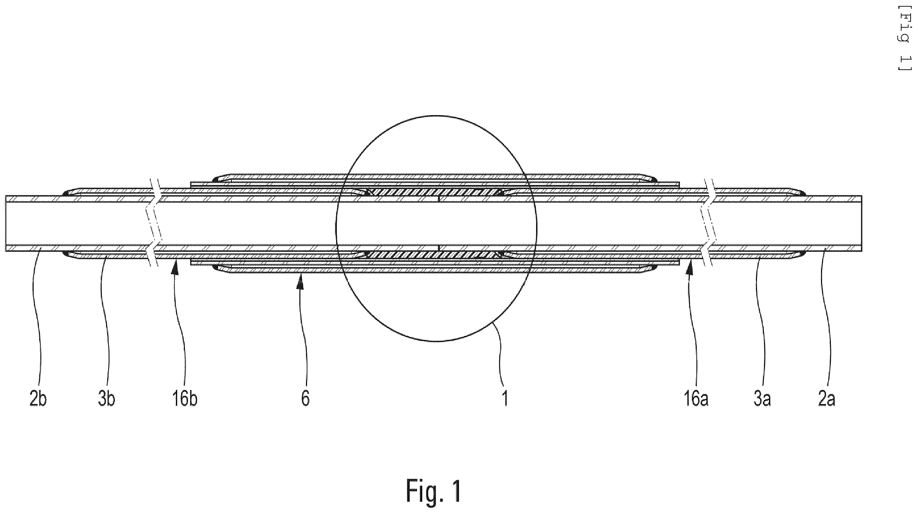

Sur la figure 1, on a représenté deux sections 16a et 16b de pipeline double enveloppe constituées respectivement des tubes intérieurs 2a et 2b et des tubes extérieurs 3a et 3b. Ces deux sections sont assemblées au niveau de leur zone de jonction à l'aide d'un raccord 1 comprenant notamment un manchon 6.

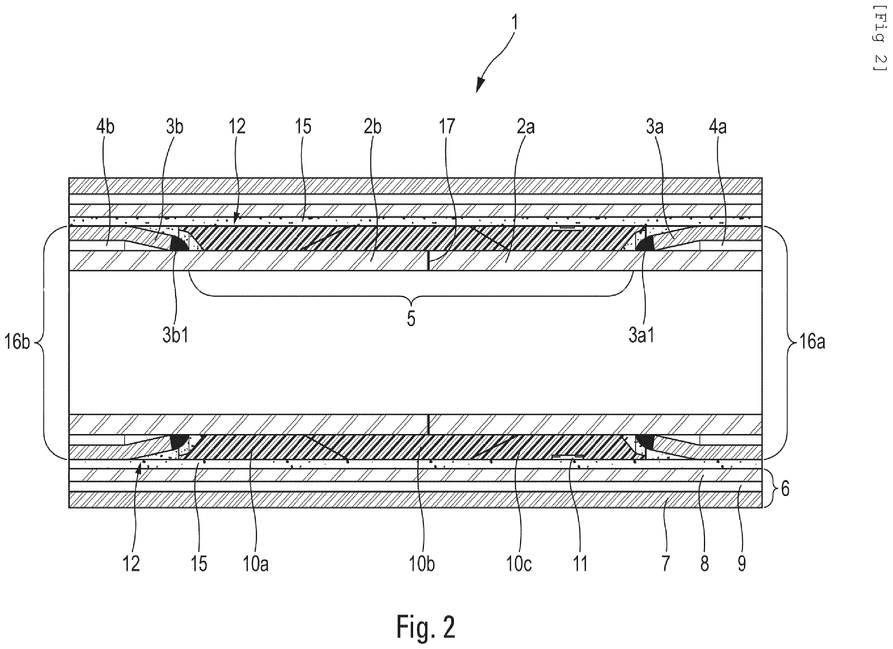

Sur la figure 2, on a représenté le raccord 1 selon l'invention au niveau de la zone de jonction entre deux sections successives 16a et 16b du pipeline au niveau de la soudure 17 des tubes intérieurs, chacune constituée respectivement d'un tube intérieur 2a, 2b, d'un tube extérieur 3a, 3b et d'un espace annulaire 4a, 4b entre les deux, le dit espace annulaire 4a ou 4b étant rempli classiquement avec un matériau isolant (non représenté). On voit également sur la figure 2 les extrémités tronconiques respectives des tubes extérieurs 3a et 3b qui sont soudées par les soudures 3a1 et 3b1 sur les tubes intérieurs respectifs 2a et 2b.

Les deux extrémités 3a1 et 3b1 délimitent la zone de la jonction 5 entre deux sections successives. Au niveau de cette zone 5, on dispose le manchon 6 recouvrant les tubes extérieurs 3a et 3b sur une longueur suffisante. Ce manchon 6 est du type double enveloppe composé d'un tube extérieur 7, d'un tube intérieur 8 délimitant un espace annulaire 9, ledit espace annulaire 9 étant rempli avec un matériau isolant (non représenté) .

Dans la zone de jonction 5, on dispose au moins un segment 10 sous la forme de demi-coquilles, maintenues à l'aide d'un système de fixation 11. Dans le mode de réalisation particulier représenté sur cette figure 2, on a prévu trois segments 10a, 10b et 10c constitués de trois paires de demi-coquilles.

Avantageusement, chaque segment (10a, 10b,..., 10n) est fabriqué par moulage et peut être constitué par un matériau durcissant de type DPCD (DiPolyCycloPentadiène) ou époxy.

Les demi-coquilles de chaque segment 10 sont maintenues à l'aide d'un moyen de fixation 11 par exemple du type cerclage.

Dans l'espace libre 12 entre les demi-coquilles 10 et le manchon 6, on injecte un matériau de remplissage durcissant 15. Ce matériau de remplissage 15 durcissant injecté ou coulé est un matériau de type DPCD ou époxy.

Ce matériau de remplissage 15 peut être également une résine polyuréthane

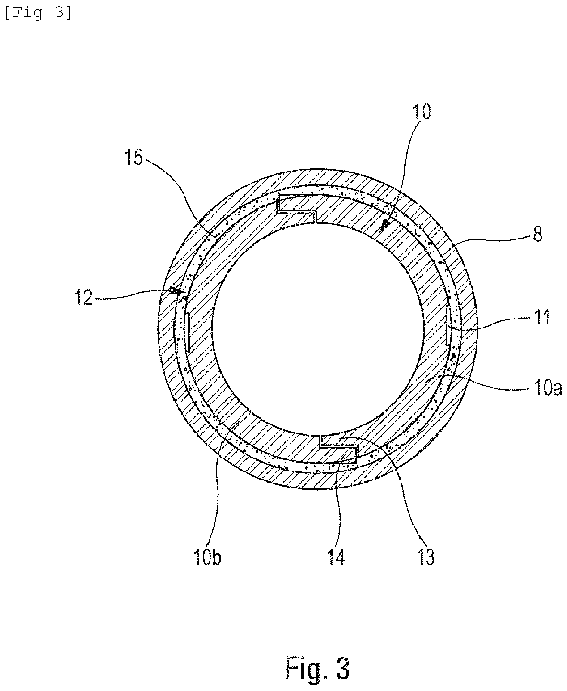

La figure 3 montre une coupe transversale pratiquée de la zone de jonction au niveau du segment 10 constitué de deux demi-coquilles 10a et 10b intégrées dans cette zone de jonction. Le pipeline à double enveloppe n'est pas représenté pour des raisons de clarté.

Les deux demi-coquilles 10a et 10b sont maintenues par un système de fixation 11 inséré dans une rainure circonférentielle. Les deux demi-coquilles 10a et 10b sont en liaison complémentaire l'une avec l'autre par leurs deux extrémités respectives 13 et 14. Ces extrémités présentent des profils complémentaires qui assurent une liaison intime des deux demi-coquilles par blocage mutuel avant la mise en place du système de fixation 11.

L'espace libre 12 entre les demi-coquilles 10a, 10b et le tube interne 8 du manchon est ensuite fermé de manière hermétique par le matériau durcissant 15, injecté ou coulé après la mise en place du manchon 6 comme expliqué précédemment.

Le remplissage de l'espace libre 12 par du matériau durcissant peut être pratiqué dans le cas d'une installation en J ou d'une installation en S.

Pour réaliser ce raccord 1, on s'y prend de la manière suivante ou de façon équivalente. On amène tout d'abord deux sections successives 16a et 16b en contact par l'intermédiaire de leur tube intérieur respectifs 2a et 2b. Une fois la jonction soudée, on installe les demi-coquilles 10a et 10b associées au moyen de fixation 11. Le manchon, qui était préalablement disposé autour du tube extérieur de l'une des sections, est ensuite glissé en place par-dessus les demi-coquilles 10a et 10b. Le matériau de remplissage 15 durcissant est ensuite coulé ou injecté entre le manchon 6 et le ou les segments 10. Bien entendu dans le cas d'une pose en J ou en S, il va de soi que le matériau de remplissage peut être injecté par le bas du manchon ou coulé par le haut du manchon pour une installation en J où les sections sont en position verticale et injecté par un point bas pour une installation en S où les sections sont en position horizontale.

## Revendications

1. Raccord (1) de canalisation connectable à un pipeline à double enveloppe constitué d'un ensemble de sections (16a, 16b, ...) comprenant notamment un tube intérieur (2a, 2b) et un tube extérieur (3a, 3b), destinée à assurer l'isolation thermique de la jonction (5) entre deux sections successives (16a, 16b), ainsi que la transmission des efforts mécaniques, **caractérisé en ce que** le raccord (1) est constitué d'au moins un segment (10) distinct des tubes intérieurs (2a,2b), ledit segment (10) étant apte à être disposé autour de la jonction des tubes intérieurs (2a, 2b) des deux section successives au niveau de la soudure (17) des tubes intérieurs (2a, 2b) et étant maintenu par un système de fixation (11), d'un manchon calorifugé (6) double enveloppe apte à être disposé autour des tubes extérieurs (3a, 3b) et à être centré au niveau de la soudure (17), et d'un matériau de remplissage (15) durcissant injecté ou coulé entre le manchon (6) et le au moins un segment (10) de manière à pouvoir remplir l'espace interstitiel (12) délimité par les tubes intérieurs (2a, 2b) de la canalisation, le au moins un segment (10) et le manchon calorifugé (6),
le manchon (6) calorifugé double enveloppe étant composé d'un tube extérieur (7), d'un tube intérieur (8) délimitant un espace annulaire (9), ledit espace annulaire (9) étant rempli avec un matériau isolant.

2. Raccord (1) de canalisation pour pipeline à double enveloppe selon la revendication 1, **caractérisé en ce qu'**il comprend plusieurs segments (10a, 10b,..., 10n), et plus particulièrement entre un et quatre segments.

3. Raccord (1) de canalisation pour pipeline à double enveloppe selon la revendication 1 ou 2, **caractérisé en ce que** chaque segment (10a, 10b,..., 10n) se présente sous la forme de demi-coquilles.

4. Raccord (1) de canalisation pour pipeline à double enveloppe selon l'une quelconque des revendications précédentes, **caractérisé en ce que** chaque segment (10a, 10b,..., 10n) est fabriqué par moulage.

5. Raccord (1) de canalisation pour pipeline à double enveloppe selon l'une quelconque des revendications précédentes, **caractérisé en ce que** chaque segment (10a, 10b,..., 10n) est constitué par un matériau durcissant de type DPCD (DiPolyCycloPentadiène) ou époxy.

6. Raccord (1) de canalisation pour pipeline à double enveloppe selon l'une quelconque des revendications précédentes, **caractérisé en ce que** le moyen de fixation (11) d'un segment est du type cerclage.

7. Raccord (1) de canalisation pour pipeline double enveloppe selon l'une quelconque des revendications précédentes, **caractérisé en ce que** le matériau de remplissage (15) durcissant injecté ou coulé est un matériau de type DPCD ou époxy.

8. Raccord (1) de canalisation pour pipeline double enveloppe selon l'une des revendications 1 à 6, **caractérisé en ce que** le matériau de remplissage (15) durcissant injecté ou coulé est une résine polyuréthane.

## Patentansprüche

1. Rohrleitungsfitting (1), das an eine doppelwandige Rohrleitung anschließbar ist, bestehend aus einer Anordnung von Abschnitten (16a, 16b, ...), die insbesondere ein Innenrohr (2a, 2b) und ein Außenrohr (3a, 3b) umfassen, zur Gewährleistung der Wärmeisolierung der Verbindungsstelle (5) zwischen zwei aufeinanderfolgenden Abschnitten (16a, 16b) sowie der Übertragung der mechanischen Kräfte, **dadurch gekennzeichnet, dass** das Fitting (1) aus mindestens einem Segment (10) besteht, das von den Innenrohren (2a, 2b) unterschiedlich ist, wobei das Segment (10) imstande ist, um die Verbindungsstelle der Innenrohre (2a, 2b) der beiden aufeinanderfolgenden Abschnitte im Bereich der Schweißnaht (17) der Innenrohre (2a, 2b) angeordnet zu sein und durch ein Befestigungssystem (11) gehalten wird, einer doppelwandigen, wärmeisolierten Hülse (6), die imstande ist, um die Außenrohre (3a, 3b) herum angeordnet zu sein und im Bereich der Schweißnaht (17) zentriert zu sein, und einem härtenden Füllmaterial (15), das zwischen der Hülse (6) und dem mindestens einen Segment (10) eingespritzt oder gegossen wird, um den Zwischenraum (12) auszufüllen, der durch die Innenrohre (2a, 2b) der Rohrleitung, das mindestens eine Segment (10) und die wärmeisolierte Hülse (6) begrenzt wird,
wobei die doppelwandige wärmeisolierende Hülse (6) aus einem Außenrohr (7), einem Innenrohr (8) zusammengesetzt ist, wobei ein ringförmiger Raum (9) begrenzt wird, wobei der ringförmige Raum (9) mit einem Isoliermaterial gefüllt ist.

2. Rohrleitungsfitting (1) für eine doppelwandige Rohrleitung nach Anspruch 1, **dadurch gekennzeichnet, dass** es mehrere Segmente (10a, 10b, ..., 10n) umfasst, und insbesondere zwischen einem und vier Segmenten.

3. Rohrleitungsfitting (1) für eine doppelwandige Rohrleitung nach Anspruch 1 oder 2, **dadurch gekennzeichnet, dass** jedes Segment (10a, 10b, ..., 10n) die Form von Halbschalen hat.

4. Rohrleitungsfitting (1) für eine doppelwandige Rohrleitung nach einem der vorstehenden Ansprüche, **dadurch gekennzeichnet, dass** jedes Segment (10a, 10b, ..., 10n) durch Gießen hergestellt ist.

5. Rohrleitungsfitting (1) für eine doppelwandige Rohrleitung nach einem der vorstehenden Ansprüche, **dadurch gekennzeichnet, dass** jedes Segment (10a, 10b, ..., 10n) aus einem härtenden Material vom Typ DPCD (DiPolyCycloPentadien) oder Epoxid besteht.

6. Rohrleitungsfitting (1) für eine doppelwandige Rohrleitung nach einem der vorstehenden Ansprüche, **dadurch gekennzeichnet, dass** die Befestigungsvorrichtung (11) eines Segments vom Typ Umreifung ist.

7. Rohrleitungsfitting (1) für eine doppelwandige Rohrleitung nach einem der vorstehenden Ansprüche, **dadurch gekennzeichnet, dass** das eingespritzte oder eingegossene aushärtende Füllmaterial (15) ein Material vom Typ DPCD oder Epoxid ist.

8. Rohrleitungsfitting (1) für eine doppelwandige Rohrleitung nach einem der Ansprüche 1 bis 6, **dadurch gekennzeichnet, dass** das eingespritzte oder eingegossene aushärtende Füllmaterial (15) ein Polyurethanharz ist.

## Claims

1. A pipe fitting (1) that can be connected to a double-walled pipeline consisting of a set of sections (16a, 16b, ...) comprising, in particular, an inner tube (2a, 2b) and an outer tube (3a, 3b), intended to ensure the thermal insulation of the connection (5) between two successive sections (16a, 16b), as well as the transmission of mechanical forces, **characterised in that** the fitting (1) consists of at least one segment (10) that is distinct from the inner tubes (2a, 2b), said section being able to be disposed around the connection of the inner tubes (2a, 2b) of two successive sections at the weld (17) of the inner tubes (2a, 2b) and to be held by a fastening system (11), a double-walled insulated sleeve (6) able to be disposed around the outer tubes (3a, 3b) and being centred at the weld (17) and a curing filling material (15) injected or cast between the sleeve (6) and the at least one segment (10) so as to fill the interstitial space (12) defined by the inner tubes (2a, 2b) of the pipeline, the at least one segment (10) and the insulated sleeve (6),
the double-walled insulated sleeve (6) being composed of an outer tube (7) and an inner tube (8) delimiting an annular space (9), said annular space (9) being filled with an insulating material.

2. The pipe fitting (1) for a double-walled pipeline according to claim 1, **characterised in that** it comprises a plurality of segments (10a, 10b, ..., 10n) and more particularly between one and four segments.

3. The pipe fitting (1) for a double-walled pipeline according to claim 1 or 2, **characterised in that** each segment (10a, 10b, ..., 10n) is in the form of half-shells.

4. The pipe fitting (1) for a double-walled pipeline according to any one of the preceding claims, **characterised in that** each segment (10a, 10b, ..., 10n) is manufactured by moulding.

5. The pipe fitting (1) for a double-walled pipeline according to any one of the preceding claims, **characterised in that** each segment (10a, 10b, ..., 10n) consists of a curing material of the DPCD (DiPolyCycloPentadiene) or epoxy type.

6. The pipe fitting (1) for a double-walled pipeline according to any one of the preceding claims, **characterised in that** the means (11) for fastening a segment is of the strapping type.

7. The pipe fitting (1) for a double-walled pipeline according to any one of the preceding claims, **characterised in that** the injected or cast curing filler material (15) is a DPCD or epoxy type material.

8. The pipe fitting (1) for a double-walled pipeline according to one of claims 1 to 6, **characterised in that** the injected or cast curing filler material (15) is a polyurethane resin.
